# EUROPEAN PATENT APPLICATION

(11) **EP 4 679 320 A1**
(43) Date of publication of application: **14.01.2026**
(21) Application number: 24315340.0
(22) Date of filing: 11.07.2024
(51) Int. Cl.: G06K 17/00, G06K 7/10, G06K 19/07, G06K 19/077, G06Q 10/087

(54) **RFID SORTING SYSTEM**

(71) Applicant: HID Textile Services SARL, 13600 La Ciotat (FR)
(72) Inventor: Moutot, Christophe, 13124 Peypin Cedex (FR)
(74) Representative: Kramer Barske Schmidtchen Patentanwälte PartG mbB

(57) **Abstract**

An RFID sorting system (60) for sorting items into assigned storing units, comprising a plurality of RFID tags (10), a plurality of RFID labels (20) and an RFID reader (40). Each RFID tag (10) is attachable to an item such as garment (19). Each RFID label (20) is attachable to or close to a storing unit such as a compartment of a shelf (29) and comprising an indicator (21), the indicator (21) being selectively switchable in an off-state (22) or on-state (23). The RFID reader (40) is configured to communicate with the plurality of RFID tags (10) and the plurality of RFID labels (20). The RFID reader (40) comprises a control unit (41) configured to control the RFID reader (40) to wirelessly identify an RFID tag (10) of the plurality of RFID tags (10), assign one of the plurality of RFID labels (20) to the identified RFID tag (10), and wirelessly command the indicator of the assigned label to switch in off-state or on-state.

## Description

### Technical Field

The present disclosure generally relates to sorting systems. In particular, the present disclosure relates to an RFID sorting system which uses wirelessly controlled indicators as a sorting aid.

### Background

Currently, in the professional textile services sector, there is a need around garments management to help professionals to manage these items, especially when sorting operations are required. For example, in nursing homes with in-house laundry services, laundry staff need to regroup cleaned garments by resident and distribute them to each resident's room. The sorting of garments requires the steps of matching a garment to a resident, sorting the garment into storing units such as boxes, laundry collectors or compartments of a shelf and distributing the sorted garments to the resident's room. Without technical assistance, the sorting of garments may take a lot of time.

The introduction of radiofrequency identification (RFID) tags helped to facilitate the process of matching a garment to a resident. RFID tags are attached to the garments as a unique identifier for each garment. By means of an RFID reader and a database having data to assign the RFID tags (attached to the garments) to the residents, the garments may be scanned and automatically matched to its owner. This information may for example be displayed on a computer screen. RFID tags may be used in conjunction with printed labels showing the resident's name (and optionally room number, service and other useful information). Thus, by using RFID tags in combination with an RFID reader, the process of matching a garment to a resident (to its owner) was significantly accelerated.

However, even with such sorting systems using RFID tags, the process of sorting the garment into storing units and distributing the sorted garments to the residents' rooms, still takes a lot of time. After having matched a garment to a resident, the laundry staff must first locate the correct storing unit (e.g., the correct compartment of a shelf) and then sort the scanned and automatically matched garment into the respective storing unit. The storing units may be mobile such that they may be used to carry and deliver the garments to the residents' rooms. If the sorting units are not mobile, the garments must first be moved to a mobile unit to carry and deliver the garments to the residents' rooms.

To further facilitate the sorting of garments, sorting systems are known that not only use RFID tags in combination with RFID readers to identify and match garments, but also use lights to indicate where the garments are to be sorted. The lights are positioned close to the storing units and indicate by lighting up in which storing unit the before-matched garment must be sorted. The lights used in such sorting systems are wired. They are connected to an electronic cabinet. The electronic cabinet is used as communication means between the RFID reader and the lights and drives the lights. The electronic cabinet usually has a communication module and a lights driver. In such systems the RFID reader first scans a garment, then the scanned garment is matched to a resident and then a command to switch on the light positioned closed to the storing unit of that resident is send to the electronic cabinet. The electronic cabinet converts this command into a switch on / switch off of the respective light. Such sorting systems are for example offered by company THERMOTEX NAGEL GmbH under the product name "SORTEXX Wäschesortiersysteme".

Sorting systems using wired lights to indicate where the garments are to be sorted are not flexible and scalable. They cannot be adapted to any kind of existing storing units. Rather, such sorting systems need to be build based on the characteristics of special storing units. A further problem is that if such sorting systems are directly integrated on the storing units, the storage units are not mobile anymore and thus cannot be used to carry and dispatch the garments in resident's rooms. The sorting system may be designed such that it is not fixed to the storing units but is movable in front of the storing units. This allows it to be removed so the storing units (if mobile) can subsequently be moved. However, in this case the sorting system requires a complex structure.

The present disclosure is directed, at least in part, to improving or overcoming one or more aspects of prior systems.

### Summary of the Disclosure

According to one aspect of the present disclosure, an RFID sorting system for sorting items into assigned storing units has a plurality of RFID tags, a plurality of RFID labels, and an RFID reader. Each RFID tag is attachable to an item such as garment. Each RFID label is attachable to or close to a storing unit such as a compartment of a shelf and has an indicator, the indicator being selectively switchable in an off-state or on-state. The RFID reader is configured to communicate wirelessly with the plurality of RFID tags and the plurality of RFID labels. The RFID reader comprises a control unit which is configured to control the RFID reader to wirelessly identify a RFID tag of the plurality of RFID tags, to assign one of the plurality of RFID labels to the identified RFID tag, and to wirelessly command the indicator of the assigned one of the RFID labels to switch in off-state or on-state.

In another aspect of the present disclosure, a method for sorting items into assigned storing units has the step of wirelessly reading an RFID tag attached to an item such as a garment to be sorted with an RFID reader. The method further comprises the step of assigning one of a plurality of RFID labels to the read RFID tag, each of the RFID labels including an indicator and being located on or adjacent to a respective one of a plurality of storing units. The method further has the step of wirelessly activating or deactivating the indicator of the assigned one of the plurality of RFID labels with the RFID reader.

Other features and aspects of the present disclosure will be apparent from the following description and the accompanying drawings.

### Brief Description of the Drawings

Fig. 1 schematically shows an exemplary embodiment of an RFID sorting system according to the present disclosure.
Fig. 2 schematically shows an exemplary embodiment of an RFID reader used in an RFID sorting system according to the present disclosure
Fig. 3 schematically shows a further exemplary embodiment of an RFID reader used in an RFID sorting system according to the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that by wirelessly controlled indicators that indicate storage units in which items such as garments need to be sorted, a flexible and easily adaptable sorting system may be provided. In contrast to known wired indicators, the use of wireless controlled indicators is not limited by the length of the wire attached to each indicator, nor does an sorting system with wireless controlled indicators need space for the wires and other components required in an sorting system with wired indicators such as an electronic cabinet connected to the wires. Further, in an sorting system with wireless indicators, the number of indicators may be easily expanded by just adding additional indicators without having to change the hardware of other components of the sorting system. This flexibility in the indicator's placeability and in the indicator's number makes the system easily adaptable to different storage units. An sorting system with wireless indicators has no infrastructure constraint related to the storing unit such as the number of cells on a shelf nor the shape of the shelf. Another advantage is that, when the sorting operation is completed, because all the indicators are wireless, the storing units (e.g., shelf) can be moved from one position to another without the need to first disassemble or remove wired indicators. In an sorting system with wireless indicators, the storage units, if they are mobile, can be used to carry and distribute the stored (and sorted) items.

In addition, it has been realized that a reader such an RFID reader may not only be used to wirelessly identify a tag, but may in addition be used to wirelessly control indicators to be switched on or off (to wirelessly activate or deactivate the indicators). A reader with such double functionality may be used in a sorting system to wirelessly identify items to be sorted and to wirelessly control indicators used to mark storage units in which the sorted items need to be placed. With such a reader a very compact and space saving sorting system may be realized. Compared to sorting systems with wired indicators, there is no longer a need for components such as an electronic cabinet and wires connected to the electronic cabinet. In a sorting system with a reader that wirelessly controls indicators to be switched on or off, a cost effective solution is provided as no complex electronic is required to drive the indicators.

According to the present disclosure, the reader is an RFID reader, the tags are RFID tags, and the indicators are controlled (activated / deactivated) via RFID technology. However, the wireless communication between the reader and the tags as well as between the reader and the indicators may also be carried out using technologies other than the RFID technology as long as the technology allows wireless communication. For example, the BLE (Bluetooth Low Energy) technology may be used to communicate wirelessly between the reader and the tags and/or between the reader and the indicators. In this case, of course the reading infrastructure must use the BLE standard, i.e., the reader must be able to communicate via BLE instead or in addition to RFID, the items to be sorted must be equipped with BLE tags instead of RFID tags and/or the storing units must be equipped with BLE controlled indicators instead of RFID labels. For the BLE tags and the BLE controlled indicators active ones with battery or passive ones without battery may be used.

In addition, it has been realized that existing systems may be easily upgraded to an RFID sorting system according to the present disclosure. If an existing system for example uses RFID tags, an RFID reader, and wired indicators connected to the RFID reader via an electronic cabinet, it is only necessary to add RFID labels having wireless controllable indicators and to associate the RFID labels with the storing units. The existing RFID tags and the existing RFID reader may be kept. The electronic cabinet and the wired indicators are no longer required. In case, the existing RFID reader has multiple antenna channels, one of the antenna channels may be used to attach a first RFID antenna that will be directed toward the storing units where the RFID labels are placed while another one of the antenna channels may be used to attach a second RFID antenna that will be directed towards the items to be sorted where the RFID tags are placed.

### RFID tags

According to the present disclosure, each of the plurality of RFID tags is attachable to an item to be sorted. The RFID tags are attachable such that a reliable connection between the RFID tag and the item to be sorted can be provided. The RFID tags be may for example be attached to the item by means of sewing, heat sealing the tag on the item, putting the tag under a heat sealable label, integration into an item hem or insertion in a pouch, the pouch being sewed. The items to be sorted may basically be any sortable objects. The item to be sorted may for example be bed sheets, bath towels, workwear, uniforms, bags, documents, books etc.

The RFID tags are configured to be uniquely identifiable by an RFID reader via wireless communication. The unique identifiability allows each item (an RFID tag is attached to) to be clearly and unambiguously identified. Depending on the application, the RFID tags may be resistant to washing and cleaning.

RFID tags are well known in the industry. RFID tags have an integrated circuit storing information such as a serial number to uniquely identify that RFID tag. An RFID antenna is connected to the integrated circuit. The RFID antenna allows wireless communication with an RFID reader.

The wireless communication between the tags and the reader may also be carried out using technologies other than the RFID technology as long as the technology allows wireless communication. In this case, the present description for the RFID tags applies equally to tags using the other technologies.

In an exemplary embodiment of the present disclosure, the plurality of RFID tags may communicate with the RFID reader using UHF. UHF (Ultra-High Frequency) is a type of RFID technology that operates in the frequency range of 300 MHz to 3 GHz, with the most common frequencies being around 860-960 MHz. In this case, each of the plurality of RFID tags and the RFID reader have an UHF antenna.

The plurality of RFID tags may be passive RFID tags, meaning that they have no internal power source and draw their power from the RFID reader. Passive RFID tags are robust and inexpensive due to their simple construction and simple electronics. Passive RFID tags are low maintenance as they do not require battery replacements. Of course, RFID tags having its own power source (active RFID tags) may be used as well.

### RFID labels

According to the present disclosure, the plurality of RFID labels is attachable to or close to the storing units. The RFID labels are attachable such that a reliable connection between the RFID label and the storing unit (the vicinity of the storing unit) is provided. The RFID labels may for example be attachable by means of glueing the label (sticker), inserting into a holder, screwing or riveting. The labels are attached to or close to the storing units such that a clear assignment of the label to one of the storing units is possible. The RFID labels are attached to or close to a specific storing unit such that its positioning allows the user to identify this specific storing unit and to distinguish it from other (adjacent) storing units. In case of a shelf, a compartment of the shelf may correspond to a single storing unit and the RFID label may for example be positioned below, above or besides the openings to the compartments. A storing unit basically may be any object that allows to receive (accommodate) the items to be sorted. For example, the storing units may be boxes, laundry collectors (carts, trolleys), bags or compartments of a shelf.

The RFID labels are provided with an indicator. The indicator is selectively switchable into an off-state or into an on-state by a command wirelessly transmitted by an RFID reader. In other words, the indicator may be activated or deactivated by the RFID reader. The indicators can be controlled independently from each other. In this way, only one indicator may be switched on and may clearly and unambiguously mark a specific storing unit. Any means suitable to indicate to a user where to sort an item may be used as indicator. The indicator may use visual, audible, tangible or other signals to communicate with the user. To give an example for an indicator, a LED light may be used.

To communicate with the RFID reader, each of the plurality of RFID labels have an RFID antenna. The plurality of RFID labels may be passive RFID labels, i.e., the RFID label is powered via a current induced in the RFID antenna. Passive RFID labels are robust and inexpensive due to their simple construction and simple electronics. Passive RFID labels are low maintenance as they do not require battery replacements. Alternatively, the RFID label may have its own power source (active RFID labels).

The wireless communication between the labels and the reader may also be carried out using technologies other than the RFID technology as long as the technology allows wireless communication. In this case, the present description for RFID labels applies equally to labels using the other technologies.

In an exemplary embodiment of the present disclosure, the RFID reader communicates with the RFID labels using UHF. In this case, each of the plurality of RFID labels and the RFID reader have an UHF antenna.

The RFID label used in an RFID sorting system according to the present disclosure may have an extra material layer. The extra material layer is configured to function as an electromagnetic shield for the RFID label in a state in which the RFID label is attached to a storage unit. The extra material layer isolates (protects) the RFID label from a metal effect when used on storing items at least partly made of metal (such as metal shelves). The material layer may for example be made of PE (Polyethylene) or PU (Polyurethane) foam, rubber, an air gap by having a package on which the tag will be put on or ceramic.

In an exemplary embodiment, the plurality of RFID labels are UHF RFID LED labels. An UHF RFID LED label uses a LED light as indicator. An UHF RFID LED label has an LED light, an integrated circuit connected to the LED light, and an UHF antenna connected to the integrated circuit. The UHF antenna is configured to wirelessly communicate with an RFID reader. The integrated circuit is configured to convert a command to switch on / off the LED light, the command being wirelessly transmitted by the RFID reader and received by the UHF antenna of the UHF RFID LED label, into a powering or no powering of the LED light to actually switch on / off the LED light. Such UHF RFID LED label may be wirelessly powered by the RFID reader. By sending a specific command (an UHF RFID command) with the right ID, the targeted UHF RFID LED label and thus the LED light positioned on the same may be powered. UHF RFID LED labels are for example offered by company RFIDHY Technology under the product name UHF RFID LED TAG.

### RFID readers

The RFID reader has multiple functions. The RFID reader is configured to wirelessly identify an RFID tag of the plurality of RFID tags, to assign one of the plurality of RFID labels to the identified RFID tag and to wirelessly command the indicator of the assigned RFID label to switch in off-state or on-state. Assigning one of the plurality of RFID labels to the identified RFID tag may include the data exchange with a database in which an assignment of the plurality of RFID labels to the plurality of RFID tags is stored. The RFID reader sends the information of the identified RFID tag to the database, the database selects one RFID label of the plurality of RFID labels and sends the information of the selected RFID label back to the RFID reader.

RFID readers are well known to the skilled person and may also referred to as RFID stations. An RFID reader may be connected to an external power source or may have an internal power source such as a battery. An RFID reader comprises an RFID module. The RFID module comprises an RFID receiver, an RFID transmitter and at least one channel to connect an RFID antenna. The RFID reader further comprises at least one RFID antenna connected to a channel of the RFID module.

RFID readers further have a control unit configured to control the RFID reader's processes such as the wirelessly identification of an RFID tag or the wirelessly activating of an indicator of an RFID labels. By means of the control unit the communication between the RFID reader, the plurality of RFID tags and the plurality of RFID labels may be controlled. As clear to the skilled person, the control unit may be formed as an integral part of the reader or alternatively may be a separate unit different from the reader.

The wireless communication between the reader and the tags and the labels may also be carried out using technologies other than the RFID technology as long as the technology allows wireless communication. In this case, the present description for the RFID reader applies equally to readers using the other technologies.

### Further exemplary embodiments

In an exemplary embodiment of the present disclosure, the RFID reader having an RFID module, a first RFID antenna and a second RFID antenna. The first RFID antenna is connected to a first channel of the RFID module and configured to communicate wirelessly with the plurality of RFID tags. The second RFID antenna is connected to a second channel of the RFID module and configured to communicate wirelessly with the plurality of RFID labels.

By providing a first and a second RFID antenna, it is possible to use different RFID antennas for the communication with the RFID tags on the one hand and with the RFID labels on the other hand. The different RFID antennas may be tailored to the respective application. The use of a second antenna connected to a second RFID channel allows to have an antenna (an antenna signal) directed toward the RFID labels. This enables to provide an efficient wireless powering of the RFID labels. With two antennas it is possible to have one antenna for the RFID tag reading and one antenna directed toward the storing units (e.g., shelf) to activate the indicators of the RFID labels. Such embodiment may for example be beneficial in a case in which a plurality of RFID tags and a plurality of RFID labels are arranged at opposite positions in relation to the RFID reader (i.e., the RFID reader is positioned between the plurality of RFID tags and the plurality of RFID labels). By directing the first antenna towards the RFID tags and the second antenna in the opposite direction towards the storing units it is possible to provide the RFID tags as well as the RFID labels with a good signal of the first respectively the second antenna.

In a further exemplary embodiment of the present disclosure, the RFID reader has an RFID module and an RFID antenna connected to the RFID module. The RFID antenna is configured to communicate with both the plurality of RFID tags and the plurality of RFID labels. This embodiment provides a very compact and simple design of the RFID reader.

In a further exemplary embodiment, the RFID sorting system has a database. The database has data allowing to assign the plurality of tags to the plurality of labels. The control unit of the reader is configured to control the reader to exchange data with the database. The database is an organized collection of electronically stored data. The data have the information to assign the plurality of tags to the plurality of labels. The database is configured to communicate with the reader, either wirelessly or by wire. Wireless communication may for example be based on Bluetooth, WiFi or M2M Communication protocols such as 4G and 5G. As clear to the skilled person, the database may be formed as a separate unit or as an integral part of the reader.

According to another exemplary embodiment, the RFID sorting system has an RFID reader and one or more RFID group tags. Each of the one or more RFID group tags is attachable to or close to a group of storing units such as a shelf and is configured to identify this group of storing units. Each RFID group tag stores information about the group of storing units it is attached to and communicates wirelessly with the reader. Information about the group of storing units may comprise its type or its configuration. For communication with the reader, the RFID group tag uses a different encoding scheme than the one used for the communication between the reader and the plurality of tags. Different encoding schemes in the present disclosure may include any communication modes which allow to distinguish the RFID group tag from the tags attached to the items to be sorted when scanning with the RFID reader. Accordingly, when reading the RFID group tags with the RFID reader, the tags attached to the items to be sorted are not read or vice versa.

A group of storage units may also be referred to as a set of storage units or as a collection of storage units. A group of storing units for example is a shelf that groups its multiple compartments. Each RFID group tag is attached to or close to a group of storing units such that a clear assignment of the RFID group tag to a group of storing units is possible.

By means of a RFID group tag it is possible to identify and distinguish a special group of storing units from other groups of storing units. A RFID group tag allows the reader to gather information about group of storing units such as its type, its configuration or other data of the group of storing units (e.g., a shelf).

The reader communicates with the RFID tags (attached to the items to be sorted) and the RFID group tags (attached to a group of sorting units) using different encoding schemes. This allows to filter for only the RFID tags or only the RFID group tags, i.e., to read only the RFID tags or only the RFID group tags by using one of the different encoding schemes. Such filtering may for example be beneficial when counting sorted items. If multiple items (e.g., garments) have been sorted into a group of storing units (e.g., shelf) and the multiple items need to be counted, the sorted items may be counted by using the encoding scheme for the RFID tags attached to the sorted items. Thus, the RFID group tag is not included in the count. Using different encoding schemes is useful whenever an inventory / stock take might be performed. Thanks to the use of a mobile reader, an inventory of a prepared shelf could be performed to have a clear picture of all the garments which have been sorted and prior to moving it to the rooms.

In an exemplary embodiment, the one or more RFID group tags communicate with the RFID reader using UHF. As an example, the GS 1 standard may be used for communication between the RFID reader, the plurality of RFID tags and the one or more RFID group tags. The GS 1 standard defines multiple classes of encoding schemes. The RFID sorting system may for example use the SGTIN (Serialised Global Trade Identification Number) encoding scheme for communication between the RFID reader and the RFID tags and use the SSCC (Serial Shipping Container Code) encoding scheme for communication between the RFID reader and the RFID group tags. UHF RFID group tags may be used to identify the shelves and UHF RFID tags may be used to identify the garments. The SSCC encoding scheme may be used by the RFID reader to identify the configuration of the shelf which will be used. Compared to alternatives such as reading a barcode to identify the shelves, the UHF RFID tag is a very efficient and comfortable solution. By reading the UHF RFID tag the RFID reader may instruct the system what is the current shelf which to be used. The UHF RFID tags of the shelves may be associate with also other type of information such as nursing home ward or special unit.

The wireless communication between the reader and the group tags may also be carried out using technologies other than the RFID technology as long as the technology allows wireless communication. In this case, the present description for the RFID group tags applies equally to group tags using the other technologies.

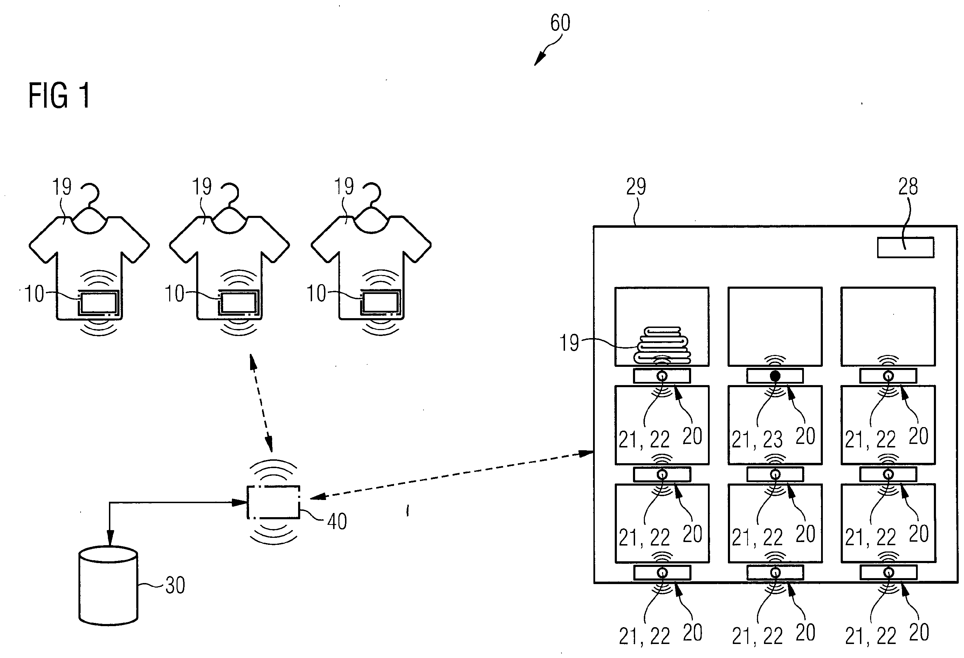

Fig. 1 schematically shows an exemplary embodiment of an RFID sorting system 60 according to the present disclosure. Fig. 1 shows three garments 19 (shirts) as an example of items to be sorted with the RFID sorting system 60. On each garment 19 an RFID tag 10 is attached. Each of the RFID tags 10 may for example be attached to the garment by means of sewing, heat sealable label applied on top of the tag, heat sealed / thermo patched, inserted into a pounch which is sewed on the linen, inserted into the hem of the item. Each of the RFID tags 10 is wirelessly connectable with an RFID reader 40. The wireless connection is indicated with a dashed double-headed arrow between the RFID tags 10 and the RFID reader 40. Further, Fig. 1 shows a shelf 29 as an example for a group of storing units. The shelf 29 has nine compartments, each of the nine compartments being a storing unit. Directly below the opening to each compartment of the shelf 29, an RFID label 20 is attached. Thus, Fig. 1 shows nine RFID labels 20. Each RFID label 20 has an LED light. One of the LED lights is in on-state 23, the others are in off-state 22. Each of the RFID labels 20 is wirelessly connectable with the RFID reader 40. The shelf 29 further has an RFID group tag 28. The RFID group tag 28 is positioned in the top right corner and is wirelessly connectable with the reader 40. The wireless connection between the labels 20 and the reader 40 as well as between the group tag 28 and the reader 40 is indicated with a dashed double-headed arrow. Further, Fig. 1 shows a database 30. The database 30 is connected to the RFID reader 40 by means of a wire. The wired connection is indicated with a straight double-headed arrow between the database 30 and the RFID reader 40. Of course, in other embodiments the wired connection between the database 30 and the RFID reader 40 may be replaced by a wireless connection such as a wireless connection using Bluetooth, WiFi or M2M Communication protocols such as 4G and 5G. Further, Fig. 1 shows the RFID reader 40. The RFID reader 40 is wirelessly connectable to the RFID tags 10 and to the RFID labels 20 and the RFID group tag 28 and has a wired connection to the database 30. For the skilled person it is clear that the connection between the database 30 and the reader 40 may be wireless and that the database 30 may be an integral part of the reader 40.

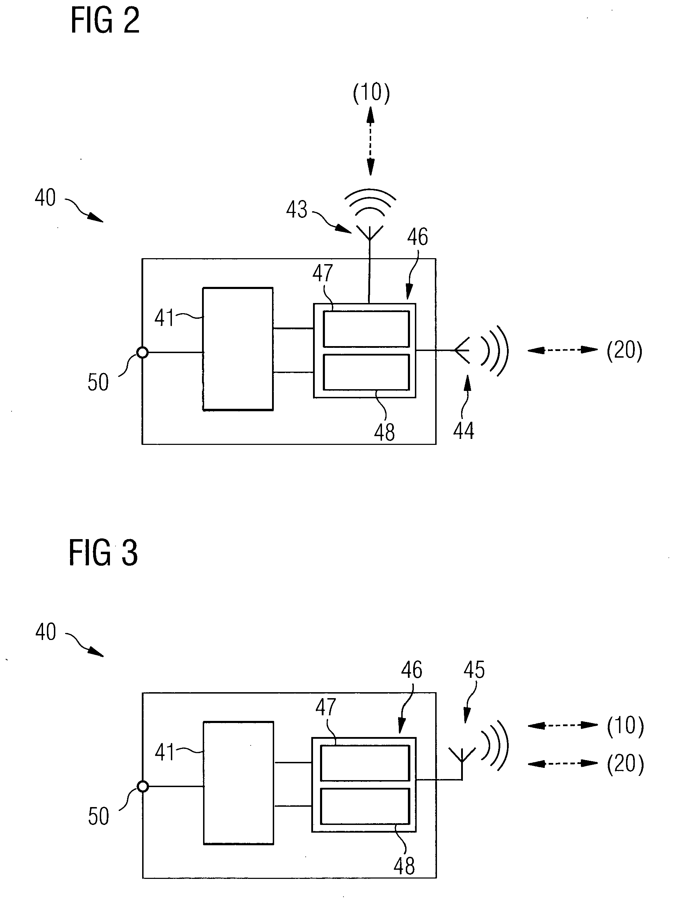

Fig. 2 schematically shows an exemplary embodiment of an RFID reader 40 used in an RFID sorting system 60 according to the present disclosure. The RFID reader 40 has an RFID module 46. The RFID module 46 has an RFID receiver 47 and an RFID transmitter 48. A first RFID antenna 43 is connected to the RFID module 46. The first RFID antenna 43 is configured to communicate wirelessly with a plurality of RFID tags 10. A second RFID antenna 44 is connected to the RFID module 46. The second RFID antenna 44 is configured to communicate wirelessly with a plurality of RFID labels 20. In case the RFID sorting system 60 has one or more group tags 28, the RFID reader 40 would be configured to communicate wirelessly with the one or more RFID group tags 28. The RFID module 46 is connected to a control unit 41. The control unit 41 is an integral part of the RFID reader 40. The RFID reader 40 further includes a port 50 for a wire (cable) that can be used to connect the RFID reader 40 to a database 30. As obvious for the skilled person, the control unit 41 may also be a separate, non-integral unit of the RFID reader 40 and the database may be connected wirelessly to the RFID reader 40.

Fig. 3 schematically shows a further exemplary embodiment of a RFID reader 40 used in an RFID sorting system according to the present disclosure. The embodiment corresponds to the embodiment shown in Fig. 2, with the exception that the RFID reader 40 does not have a first and a second RFID antenna 43, 44, but has only one RFID antenna 45. The single RFID antenna 45 is configured to wirelessly communicate with both, the plurality of RFID tags 10 and the plurality of RFID labels 20. In case the RFID sorting system 60 has one or more group tags 28, the RFID reader 40 would be configured to communicate wirelessly with the one or more RFID group tags 28.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### List of references

- 10: RFID tag
- 19: garment
- 20: RFID label
- 21: indicator
- 22: indicator in off-state
- 23: indicator in on-state
- 28: RFID group tag
- 29: shelf
- 30: database
- 40: RFID reader
- 41: control unit
- 43: first RFID antenna
- 44: second RFID antenna
- 45: RFID antenna
- 46: RFID module
- 47: RFID receiver
- 48: RFID transmitter
- 50: port for database connection
- 60: RFID sorting system

## Claims

1. An RFID sorting system (60) for sorting items into assigned storing units, comprising:
a) a plurality of RFID tags (10), each RFID tag (10) being attachable to an item such as garment (19);
b) a plurality of RFID labels (20), each RFID label (20) being attachable to or close to a storing unit such as a compartment of a shelf (29) and comprising an indicator (21), the indicator (21) being selectively switchable in an off-state (22) or on-state (23); and
c) an RFID reader (40) configured to communicate wirelessly with the plurality of RFID tags (10) and the plurality of RFID labels (20), the RFID reader (40) comprising a control unit (41) configured to control the RFID reader (40) to:
- wirelessly identify an RFID tag (10) of the plurality of RFID tags (10),
- assign one of the plurality of RFID labels (20) to the identified RFID tag (10), and
- wirelessly command the indicator (21) of the assigned one of the RFID labels (20) to switch in off-state or on-state.

2. The RFID sorting system (60) according to claim 1, wherein each of the plurality of RFID labels (20) comprises:
a) an RFID antenna configured to wirelessly communicate with the RFID reader (40); and
b) an integrated circuit connected to the RFID antenna and to the indicator (21), the integrated circuit being configured to convert a command to switch the indicator (21) in off-state (22) or in on-state (23) into a powering or no powering of the indicator (21), the command being wirelessly transmitted by the RFID reader (40) and received by the RFID antenna of the RFID label (20).

3. The RFID sorting system (60) according to any one of the preceding claims, wherein the indicator (21) is a LED light.

4. The RFID sorting system (60) according to any one of the preceding claims, wherein the RFID reader (40) comprises:
a) an RFID module (46);
b) a first RFID antenna (43) connected to the RFID module (46) and configured to communicate wirelessly with the plurality of RFID tags (10); and
c) a second RFID antenna (44) connected to the RFID module (46) and configured to communicate wirelessly with the plurality of RFID labels (20).

5. The RFID sorting system (60) according to any one of claims 1-3, wherein the RFID reader (40) comprises:
a) an RFID module (46); and
b) an RFID antenna (45) connected to the RFID module (46) and configured to communicate wirelessly with the plurality of RFID tags (10) and the plurality of RFID labels (20).

6. The RFID sorting system (60) according to any one of the preceding claims, wherein each of the plurality of RFID tags (10) and the RFID reader (40) comprise an UHF antenna, the UHF antennas being configured to communicate with each other.

7. The RFID sorting system (60) according to any one of the preceding claims, wherein each of the plurality of RFID labels (20) and the RFID reader (40) comprise an UHF antenna, the UHF antennas being configured to communicate with each other.

8. The RFID sorting system (60) according to any one of the preceding claims, wherein the plurality of RFID tags (10) and/or the plurality of RFID labels (20) has no internal power source and draws power from the RFID reader (40).

9. The RFID sorting system (60) according to any one of the preceding claims, wherein at least one of the plurality of RFID labels (10) comprises an extra material layer, the extra material layer being configured to function as an electromagnetic shield for the RFID label (10) in a state in which the RFID label (20) is attached to a storage unit.

10. The RFID sorting system (60) according to any one of the preceding claims, further comprising a database (30) comprising data allowing to assign the plurality of tags (10) to the plurality of labels (20), wherein the control unit (41) of the reader (40) is configured to control the reader (40) to exchange data with the database (30).

11. The RFID sorting system (60) according to any one of the preceding claims, further comprising one or more RFID group tags (28), each of the one or more RFID group tags (28) being attachable to or close to a group of storing units such as a shelf (29) and configured to communicate wirelessly with the RFID reader (40) to identify the group of storing units, wherein a different encoding scheme is used for the communication between the RFID reader (40) and the one or more RFID group tags (28) than for the communication between the RFID reader (40) and the plurality of RFID tags (10).

12. A method for sorting items (19) into assigned storing units, the method comprising the steps of:
- wirelessly reading an RFID tag (10) attached to an item such as a garment (19) to be sorted with an RFID reader (40);
- assigning one of a plurality of RFID labels (20) to the read RFID tag (10), each of the RFID labels (20) including an indicator (21) and being located on or adjacent to a respective one of a plurality of storing units; and
- wirelessly activating or deactivating the indicator (21) of the assigned one of the plurality of RFID labels (20) with the RFID reader (40).

13. The method according to claim 12, further comprising the step of providing an RFID reader (40) comprising a first RFID antenna (43) configured to communicate wirelessly with the plurality of RFID tags (10) and a second RFID antenna (44) configured to communicate wirelessly with the plurality of RFID labels (20).

14. The method according to any one of claims 12 to 13, further comprising the steps of:
- wirelessly reading an RFID group tag (28) being located on or adjacent to a group of storing units such as a shelf (29) with the RFID reader (40);
- determining information such as the type, the configuration or similar of the group of storing units; and
- using a different encoding scheme for the communication between the RFID group tag (28) and the RFID reader (40) than the one used for the communication between the RFID reader (40) and the plurality of RFID tags (10).
